# EUROPÄISCHE PATENTSCHRIFT

(11) **EP 1 110 309 B1**
(45) Veröffentlichungstag und Bekanntmachung des Hinweises auf die Patenterteilung: **06.08.2003**
(21) Anmeldenummer: 99922078.3
(22) Anmeldetag: 30.03.1999
(51) Int. Cl.: H03G 3/30, H04B 10/152

(54) **OPTISCHE VERSTÄRKER UND OPTISCHE ÜBERTRAGUNGSSTRECKE**
OPTICAL AMPLIFIERS AND OPTICAL TRANSMISSION LINE
AMPLIFICATEUR OPTIQUE ET LIGNE DE TRANSMISSION OPTIQUE

(30) Priorität: 26.08.1998 DE 19838788
(43) Veröffentlichungstag der Anmeldung: 27.06.2001
(73) Patentinhaber: SIEMENS AKTIENGESELLSCHAFT, 80333 München (DE)
(72) Erfinder: KRUMMRICH, Peter, D-81379 München (DE); WEISKE, Claus-Jörg, D-82256 Fürstenfeldbruck (DE); SCHREIBLEHNER, Martin, A-1210 Wien (AT); MADER, Wolfgang, A-1230 Wien (AT)
(86) Internationale Anmeldenummer: DE9900963
(87) Internationale Veröffentlichungsnummer: WO00013313

(56) Entgegenhaltungen:
- EP-A- 0 805 571
- EP-A- 0 910 139
- WO-A-98/28826
- FR-A- 2 759 831
- US-A- 5 446 812
- PATENT ABSTRACTS OF JAPAN vol. 017, no. 378 (E-1398), 15. Juli 1993 (1993-07-15) & JP 05 063643 A (NEC CORP), 12. März 1993 (1993-03-12)
- PATENT ABSTRACTS OF JAPAN vol. 098, no. 012, 31. Oktober 1998 (1998-10-31) & JP 10 190107 A (KYOCERA CORP), 21. Juli 1998 (1998-07-21)
- PATENT ABSTRACTS OF JAPAN vol. 017, no. 098 (P-1494), 26. Februar 1993 (1993-02-26) & JP 04 293025 A (NEC CORP), 16. Oktober 1992 (1992-10-16)

## Beschreibung

Die Erfindung betrifft geregelte optische Verstärker und optische Übertragungsstrecken, in denen diese Verstärker eingesetzt werden.

In optischen Übertragungsnetzen werden als Ausgleich für die Faserdämpfung optische Verstärker eingesetzt. Ein stabiler Betrieb über weitere Übertragungsstrecken ist aber nur dann möglich, wenn Änderungen der Systemparameter mit Hilfe von Regelungen ausgeglichen werden. In bisher eingesetzten Wellenlängen-Multiplex-Übertragungssysteme werden die Summenausgangsleistungen der Verstärker geregelt. Bei Einkanalsystemen oder Strecken mit konstanter Kanalzahl werden durch dieses Regelkonzept recht gut langsame Veränderungen der Systemparameter - beispielsweise durch Temperaturschwankung oder Alterung - kompensiert.

Eine Vorrichtung zur Verstärkung eines optischen WDM-Signals mittels eines optischer Faser (z.B. EDFA) ist im Dokument "Patent Abstract of Japan, JP-A-05063643" beschrieben. Der Verstärker weist auf zwei photoelektrische Elementen auf, die die Lichtleistung vor und nach dem Verstärker messen. Durch die Differenz der zwei photoelektrischen Signale bezüglich einer festgesetzten Referenzspannung wird die Leistung der Pumpquelle so gesteuert, daß der Verstärkung des Verstärkers an einen bestimmten Wert angepaßt wird.

Ein optisches Übertragungssystem mit verbessertem Signal-Rauschabstand ist im Dokument "United States Patent, US-A-5446812" beschrieben. Mehrere Verstärker werden über der Übertragungsstrecke nacheinander angeschlossen und selektiv durch eine Kontrolleinheit entweder statisch oder dynamisch so gesteuert, daß der erhaltene Signal-Rauschabstand oder OSNR am Ausgang der Übertragungsstrecke maximal wird.

Im Dokument "Patent Abstract of Japan, JP-A-04293025" ist ein Übertragungssystem mit nacheinander geschalteten Verstärkern beschrieben. Wie im Dokument "United States Patent, US-A-5446812" wird ein Steuersignal an alle Verstärker zur Kontrolle des Gewinns geführt. Nach dem Abstract wird ein variierendes Pilot-Signal als Referenzsignal zur Einstellung der Verstärkung verwendet.

Keines der drei oben zitierten beschriebenen Systeme ermöglicht die Konstanthaltung der Leistung je Kanal bei unterschiedlichen Kanalzahlen.

Wenn sich jedoch die Anzahl der Kanäle während des Betriebes ändert, dann verändert eine solche Summenausgangsleistung-Regelung die Pegel der einzelnen WDM-Übertragungskanäle. Eine solche Pegeländerung läßt sich grundsätzlich umgehen, indem die Anzahl der aktiven Kanäle ermittelt und den Regeleinrichtungen der einzelnen optischen Verstärker mitgeteilt wird. Diese passen den Sollwert für den Ausgangspegel des Verstärkers entsprechend an. Aufgrund der unterschiedlichen Zeitkonstanten gelingt diese Pegelanpassung jedoch üblicher Weise nicht ohne kurzzeitige Schwankungen - verbunden damit sind erhebliche Einbußen der Übertragungsqualität.

Eine andere Lösungsmöglichkeit besteht in der Regelung der einzelnen Verstärker auf konstanten Gewinn (Verstärkung) - Solche Verstärker sind in "Electronic Letters" 26^{th} March, 1991, Vol. 27, No. 7, Page 560 - 561 und "Electronic Letters", 9^{th} June, 1994, Vol. 30, No. 12, Page 962 - 964 beschrieben. Bei diesen Schaltungen werden bei einer Änderung der Anzahl von aktiven Kanälen die Pegelschwankungen der verbleibenden Kanäle unterdrückt, indem der Gewinn konstant gehalten wird. Als Regelkonzept für eine Übertragungsstrecke mit mehreren Verstärkern eignet sich jedoch auch dieses Regelprinzip nicht, weil sich langsame Änderungen der Streckenparameter aufsummieren und hierdurch die Übertragungsqualität verschlechtert wird.

Aus EP-A-0 910 139 (Stand der Technik gemäß Art, 54(3) EPÜ für die benannten Vertragsstaaten DE, FR, GB) ist ein optischer Verstärker für WDM-Signale bekannt, bei dem ein Kontrollmodul eine Pegelregelung und eine Gewinnregelung in abwechselnder Weise steuert. Bei Änderungen der übertragenen Gesamtleistung werden die Pegel von Ausgangssignalen bzw. der Gewinn des Verstärkers konstant gemäß einem vordefinierten Referenzwert gehalten. Auf dieser Weise werden Überschreitungen von Pegeltoleranzen unterdrückt, damit keine hohen nicht-linearen Effekte bei der Übertragung auftreten. Eine weitere Variante basiert auf der Ermittlung einer zeitlichen Mittelung der Ausgangsleitung mit einer vorgeschalteten Fotodiode, deren Vergleich mit einem vorgegebenen Referenzwert den Wechsel zwischen Pegelregelung und Gewinnregelung steuert. Dabei werden die Referenzwerte extern z. B. aus einem Überwachungssystem zugeführt. Ändern sich die systembedingten Eigenschaften der Übertragung, z. B. durch eine Änderung der Kanalzahl, müssten diese Referenzwerte aktualisiert werden, was unvermeidlich zu kurzzeitigen Schwankungen führen sollte.

Aus EP-A-0 805 571 ist ein optischer Verstärker für WDM-Signale mit den wesentlichen Eigenschaften des vorigen Verstärkers bekannt, bei dem ein Kontrollmodul zwischen einer Pegelregelung und einer Gewinnregelung bei Kanalzahländerungen umschaltet. Dem Kontrollmodul werden hier noch systembedingte Referenzparameter extern mittels eines Überwachungskanals zugeführt. Durch die Umschaltung zwischen den beiden Regelungen können ebenfalls kurzzeitige Schwankungen auftreten.

Aufgabe der Erfindung ist es daher, für optische Übertragungsnetze geeignete Verstärker anzugeben.
Außerdem sind die Übertragungsstrecken so auszubilden, daß auch bei einer Änderung der Kanalzahl die Empfangspegel der einzelnen WDM-Kanäle konstant bleiben.

Die Aufgabe wird durch einen geregelten optischen Verstärker nach Anspruch 1 gelöst.

Eine mit diesen Verstärkern ausgerüsteten Übertragungsstrecke ist in dem Anspruch 7 beschrieben.

Vorteilhafte Weiterbildungen sind jeweils in abhängigen Ansprüchen beschrieben.

Der Vorteil des erfindungsgemäßen optischen Verstärkers liegt darin, daß die Gewinnregelung in dem ersten Regelkreis mit kurzer Zeitkonstante arbeitet. Änderungen der Anzahl aktiver WDM-Kanäle wirken sich deshalb nur minimal auf die Ausgangspegel aus. Der zweite Regelkreis sorgt dafür, daß langsame Änderungen ausgeregelt werden. Bei einer Änderung der Anzahl aktiver Kanäle erfolgt eine entsprechende Änderung des Sollwertes des zweiten Regelkreises durch ein sendeseitiges, in die Übertragungsstrecke eingeschaltetes lokales oder empfangsseitiges Terminal (Netzknoten), so daß die Ausgangspegel-Regelung - wenn überhaupt - nur kurzfristig und nur minimal wahrnehmbar ist.

Wird im zweiten Regelkreis ein Speicherglied vorgesehen, so ist es möglich, diesen Regelkreis nur zu bestimmten Zeiten wirksam werden zu lassen, um den Empfangspegel zu ändern oder während einer Änderung der Kanalanzahl zu deaktivieren.

Durch die Verwendung einer Ausgangspegel-Regelung brauchen die Verstärker nur noch Information über die Anzahl der WDM-Kanäle oder einen entsprechenden Sollwert erhalten.

Die mit diesen Verstärkern ausgerüsteten Übertragungsstrecken können auch langsame durch Alterungsprozesse bedingte Verstärkungsänderungen ausregeln.

Die Erfindung wird anhand von zwei Ausführungsbeispielen näher beschrieben.

Es zeigen:
- Figur 1: ein Prinzipschaltbild des erfindungsgemäßen Verstärkers mit Regelung der Ausgangsleistung,
- Figur 2: ein Prinzipschaltbild mit einem Faserverstärker,
- Figur 3: eine Übertragungsstrecke mit mehreren Verstärkern.

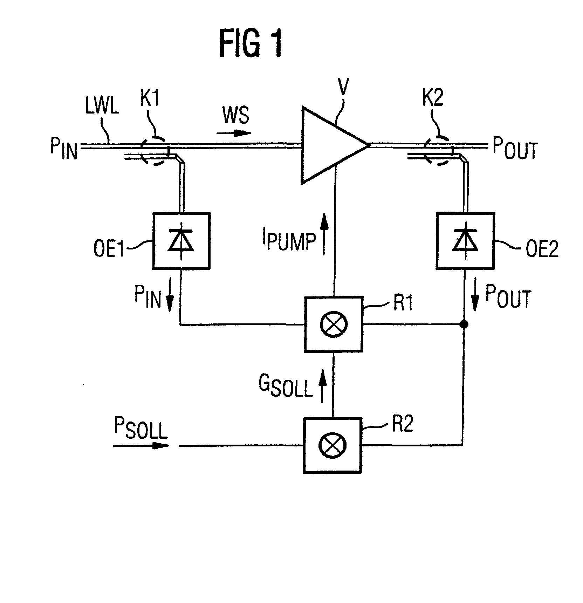

Ein Ausführungsbeispiel der Erfindung ist als Prinzipschaltbild in **Figur 1** dargestellt. Ein optischer Verstärker V dient zur Verstärkung eines über einen Lichtwellenleiter LWL übertragenen Wellenlängen-Multiplexsignals MS. Eingangsseitig ist ein erster Meßkoppler K1 vorgesehen, der einen Teil des Signals abzweigt. Dieser wird von einem ersten optoelektronischen Wandler OE1 in ein dem Eingangspegel (Eingangssummenleistung) P_{IN} entsprechendes elektrisches Meßsignal p_{IN} umgesetzt, das einem ersten Regler R1 zugeführt wird. Ebenso wird über einen zweiten Meßkoppler K2 und einen zweiten optoelektronischen Wandler OE2 ein der Ausgangsleistung P_{OUT} entsprechendes Meßsignal p_{OUT} gewonnen, das ebenfalls dem ersten Regler zugeführt wird. Je nach (einstellbaren Verhältnis) P_{OUT} zu P_{IN} wird beispielsweise bei einem Faserverstärker der Pumpstrom I_{PUMP} geregelt, bzw. bei einem Halbleiterverstärker der Steuerstrom. Ebenso können andere Prinzipien der Gewinnregelung verwendet werden, die beispielsweise in der angegebenen Literatur beschrieben sind.

Außer einer der raschen Gewinnregelung dienenden (vereinfacht dargestelltem) ersten Regeleinrichtung (Regelkreis) (K1, OE1, K2, OE2, R1, V) ist eine zweite dominierende Regeleinrichtung (Regelkreis K2, OE2, R2, R1, V) vorgesehen, der die Ausgangsleistung (Ausgangspegel) P_{OUT} durch Vergleich des entsprechenden Meßwertes p_{OUT} mit einer Führungsgröße, dem Sollwert p_{SOLL}, regelt. Langsame, beispielsweise durch Temperaturveränderung oder Alterung bedingte Änderungen der Übertragungsdämpfung werden durch diesen zweiten Regelkreis ausgeregelt. Die vom zweiten Regler R2 abgegebene Stellgröße G_{SOLL} bestimmt durch Eingriff in den ersten Regelkreis den Pumpstrom und damit den Gewinn des optischen Verstärkers. Bei Änderungen der Anzahl der Übertragungskanäle soll sich der Gewinn nicht ändern. Die Pegelregelung darf also nicht sofort wirksam werden, was durch eine in der Regel sehr viel größere Zeitkonstante des zweiten Regelkreises gegenüber der Zeitkonstante des ersten Regelkreises erreicht werden kann.

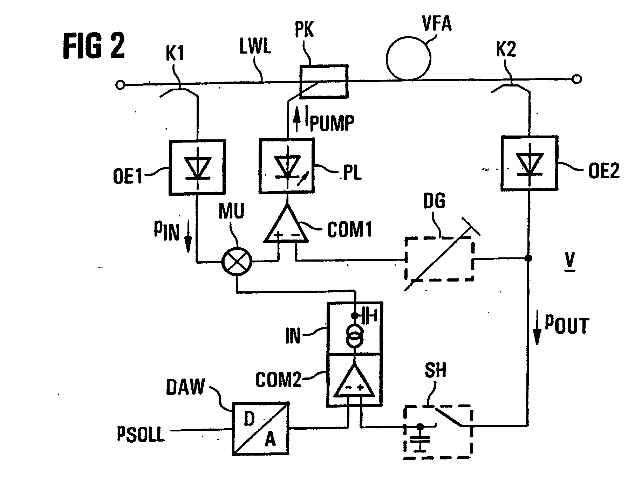

**Figur 2** zeigt Einzelheiten der Verstärkerschaltung mit einem Faserverstärker VFA, dessen Gewinn durch den von einem gesteuerten Pumplaser PL erzeugten Pumpstrom I_{PUMP} bestimmt wird, der über einen Pumpkoppler PK eingekoppelt wird. Der erste Regler R1 kann ein Dämpfungsglied DG, das an den zweiten optoelektrischen Wandler OE2 angeschaltet ist und einen ersten Komparator COM1 enthalten. Läßt man den zweiten Regelkreis außer acht, so ist mit dem Dämpfungsglied der Gewinn einstellbar. Eine Möglichkeit zur "Ausgangspegelregelung durch Änderung des Gewinns" wäre die direkte Änderung des Dämpfungsgliedes DG durch die Führungsgröße P_{SOLL}.

Im Ausführungsbeispiel erfolgt in der zweiten Regeleinrichtung (im zweiten Regelkreis) K2, OE2, COM2, MU, IN, COM1, PL, PK, VFA - wie im Prinzip bereits beschrieben - in einem zweiten Komparator COM2 der Vergleich zwischen der Ausgangsleistung und der Führungsgröße P_{SOLL}. Das Ergebnis dieses Vergleichs verändert über den Multiplizierer MU das Eingangssignal des ersten Komparators COM1 und steuert so den Pumpstrom und damit den Gewinn des Faserverstärkers VFA. Auf das Dämpfungsglied kann verzichtet werden, da der zweite Regelkreis über den Multiplizierer den Gewinn bestimmt.

Wie bereits erwähnt, soll die Zeitkonstante im zweiten Regelkreis ausreichend groß sein, um im Falle der Änderung der Kanalanzahl durch eine entsprechend extern durchgeführte Änderung der Führungsgröße deren Einfluß zu neutralisieren. Ein Speicherglied SH kann ebenfalls dazu beitragen. Dieses kann auch zwischen dem Integrator und dem Multiplizierer eingeschaltet werden. Als Zeitkonstante bei hohen Datenraten im Megabit/Sekunden-Bereich ist für den ersten Regelkreis ein Bereich von ca. 1 Mikrosekunde bis eine Millisekunde ausreichend und für die zweite Regeleinrichtung ist ein Bereich von ca. 0,1 Sekunde über mehrere Sekunden und Minuten bis zu Stunden zweckmäßig. Die Zeitkonstante kann für unterschiedliche Betriebszustände auch umgeschaltet werden. So kann für die Inbetriebnahme eine kleine Zeitkonstante gewählt werden von beispielsweise 100 Mikrosekunden, bei Änderung der Kanalanzahl eine Zeitkonstante von 1 Sekunde und bei bedarfweise erfolgender Pegeländerung eine Zeitkonstante von mehreren Minuten zweckmäßig sein.

Für den zweiten Regler bietet sich ein Integralverhalten oder zumindest ein Integralanteil an, das noch durch eine Totzeit ergänzt werden kann. Der zweite Komparator und der Integrator können bei einer Schaltungsausführung zusammengefaßt werden.

Die Verstärkerschaltungen mit den zugehörigen Regelkreisen können natürlich in jeder beliebigen Weise aufgebaut sein.

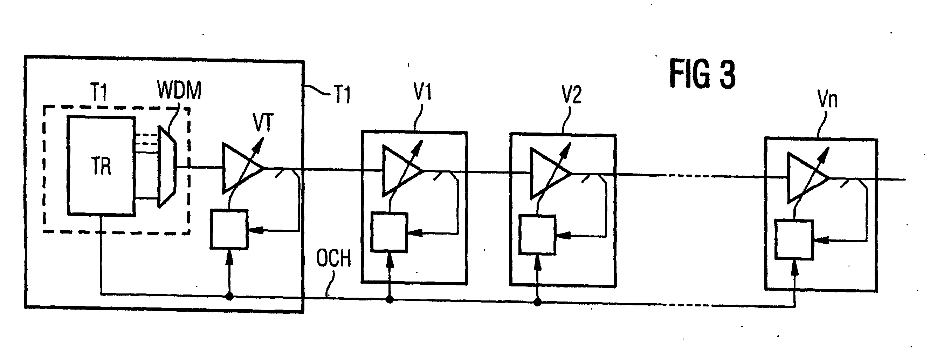

In **Figur 3** ist eine Übertragungsstrecke mit mehreren optischen Verstärkern VT, V1 bis Vn dargestellt. In einem Sendeterminal T1 wird ein Wellenlängen-Multiplexsignal MS in einer Sendeeinrichtung TR mit nachgeschalteten Wellenlängen-Multiplexer WDM erzeugt, in einem optischen Verstärker VT verstärkt und in die Strecke eingespeist. Die Verstärker sind so eingestellt, daß sie jeweils den Bedingungen des jeweiligen Streckenabschnittes entsprechende Ausgangspegel liefern, die durch den zweiten Regelkreis auch bei sich langsam ändernden Übertragungseigenschaften erhalten bleiben.

Wird die Anzahl der WDM-Kanäle verändert, so wird der Ausgangspegel am zunächst in jedem Kanal durch den ersten Regelreis weiter konstant gehalten. Aufgrund der langsamen Zeitkonstante/Totzeit greift die Ausgangspegel-Regelung zunächst nicht in den Regelungsprozeß ein. Da gleichzeitig über einen Überwachungskanal OCH vom Terminal den Verstärkern die Änderung der Führungsgröße mitgeteilt wird, die zur Einstellung des neuen Ausgangspegel dient, erfolgt praktisch keine Beeinflussung durch den zweiten Regelkreis. Eine jedem Verstärker zugeordnete separate Überwachung der Kanalanzahl ist dagegen noch zu aufwendig.

Zu ergänzen ist noch, daß über den Überwachungskanal die Ausgangsleistungen auch individuell einstellbar sein können.

## Patentansprüche

1. Geregelter optischer Verstärker (V, V1, ...), insbesondere für Wellenlängenmultiplex-Signalübertragung, mit einer ersten Regeleinrichtung (V, OE1, OE2, R1) zur Regelung des Gewinns,
**dadurch gekennzeichnet,**
**daß** eine dominierende zweite Regeleinrichtung (V, OE1, OE2, R2, R1) zur Erzeugung einer Stellgröße (G_{SOLL}) für die erste Regeleinrichtung, mit wesentlich langsameren Regelverhalten zur Regelung der Ausgangsleistung (P_{OUT}) entsprechend einer zugeführten Führungsgröße (p_{SOLL}) vorgesehen ist.

2. Geregelter optischer Verstärker (V, V1, ...) nach Anspruch 1,
**dadurch gekennzeichnet,**
**daß** die erste Regeleinrichtung aus einem optischen Verstärker (PL, PK, VFA), einem an dessen Ausgang angeschalteten zweiten optoelektrischen Wandler (OE2) und einem ersten Komparator (COM1) gebildet wird, dem über einen ersten optoelektrischen Wandler (OE1) ein dem Eingangspegel entsprechendes Meßsignal (P_{IN}) zugeführt wird, und
**daß** die zweite Regeleinrichtung in wesentlichen aus dem optischen Verstärker (PL, PK, VFA), dem an dessen Ausgang angeschalteten optoelektrischen Wandler (OE2), einem zweiten Komparator (COM2) gebildet wird, dessen zweitem Eingang ein Sollwert (P_{SOLL}) zugeführt wird, einem zwischen dem ersten optoelektrischen Wandler (OE1) und dem ersten Komparator (COM1) eingeschalteten Multiplizierer (MU), dem das Ausgangssignal des zweiten Komparators zugeführt wird, und dem ersten Komparator (COM1) gebildet wird.

3. Geregelter optischer Verstärker (V) nach einem der vorhergehenden Ansprüche,
**dadurch gekennzeichnet,**
**daß** er als Faserverstärker (PL, PK, VFA) ausgeführt ist und daß der Pumpstrom (I_{PUMP}) durch die Regeleinrichtungen gesteuert wird.

4. Geregelter optischer Verstärker (V) nach einem der vorhergehenden Ansprüche,
**dadurch gekennzeichnet,**
**daß** die zweite Regeleinrichtung (OE1, OE2, R2, R1; RE, DAW, MU, COM1, PL, VFA) einen Integral-Anteil aufweist oder als Integralregler ausgebildet ist.

5. Geregelter optischer Verstärker (V, V1, ...) nach einem der vorhergehenden Ansprüche,
**dadurch gekennzeichnet,**
**daß** die zweite Regeleinrichtung einen Totzeitanteil aufweist.

6. Geregelter optischer Verstärker (V, V1, ...) nach einem der vorhergehenden Ansprüche,
**dadurch gekennzeichnet,**
**daß** die Zeitkonstante der zweiten Regeleinrichtung (OE1, OE2, R2, R1; RE, DAW, IN, MU, COM1, PL, VFA) umschaltbar ist.

7. Übertragungsstrecke mit mehreren in Kette geschalteten Verstärkern (V, ...) nach Anspruch 1,
**dadurch gekennzeichnet,**
**daß** den Verstärkern (V, ...) als Führungsgröße ein der jeweils gewünschte Ausgangsleistung (P_{OUT}) bestimmender Sollwert (P_{SOLL}) zugeführt wird.

8. Übertragungsstrecke nach Anspruch 7,
**dadurch gekennzeichnet,**
**daß** als Führungsgröße ein digitaler Sollwert (P_{SOLL}) übertragen wird, der die Anzahl der aktiven WDM-Signale beinhaltet.

## Claims

1. Controlled optical amplifier (V, V1, ...), in particular for wavelength division multiplex signal transmission, with a first control device (V, OE1, OE2, R1) for gain control,
**characterized in that**
a dominant second control device (V, OE1, OE2, R2, R1), for generating a manipulated variable (G_{SOLL}) for the first control device, with a substantially slower control response is provided to control the output level (P_{OUT}) according to a supplied feed parameter (P_{SOLL}).

2. Controlled optical amplifier (V, V1, ...), according to Claim 1,
**characterized in that**
the first control device is formed from an optical amplifier (PL, PK, VFA), a second opto-electrical transducer (OE2) connected to the output of the latter and a first comparator (COM1), to which a measurement signal (P_{IN}) corresponding to the input signal (p_{IN}) is fed via a first opto-electrical transducer (OE1), and
that the second control device is essentially formed from the optical amplifier (PL, PK, VFA), the opto-electrical transducer (OE2) connected to the output of the-latter, a second comparator (COM2), to the second output of which a required value (P_{SOLL}) is fed, a multiplier (MU) inserted between the first opto-electrical transducer (OE1) and the first comparator (COM1), to which the output signal of the second comparator is fed, and the first comparator (COM1).

3. Controlled optical amplifier (V) according to one of the previous claims,
**characterized in that**
it is designed as an optical fiber amplifier (PL, PK, VFA), and **in that** the pump current (I_{PUMP}) is controlled by the control devices.

4. Controlled optical amplifier (V) according to one of the preceding claims,
**characterized in that**
the second control device (OE2, R2, R1; RE, DAW, MU, COM1, PL, VFA) has an integral-action component or is designed as an integral-action controller.

5. Controlled optical amplifier (V, V1, ...) according to one of the preceding claims,
**characterized in that**
the second control device has a dead-time component.

6. Controlled optical amplifier (V, V1, ...) according to one of the preceding claims,
**characterized in that**
the time constant of the second control device (OE2, R2, R1; RE, DAW, IN, MU, COM1, PL, VFA) can be switched over.

7. Transmission path with a plurality of amplifiers (V,...) connected in series, according to Claim 1
**characterized in that**
a required value (P_{SOLL}) which determines the relevant required output level (P_{OUT}) is supplied as a feed parameter to the amplifiers (V,...).

8. Transmission path according to Claim 7,
**characterized in that**
a digital required value (P_{SOLL}) containing the number of active WDM signals is transmitted as the feed parameter.

## Revendications

1. Amplificateur optique régulé (V, V1, ...), en particulier pour la transmission de signaux multiplexés par répartition en longueur d'onde, avec un premier dispositif de régulation (V, OE1, OE2, R1) pour la régulation du gain,
**caractérisé en ce que**
un deuxième dispositif de régulation, dominant, (V, OE1, OE2, R2, R1), pour la création d'une grandeur de consigne (G_{SOLL}) du premier dispositif de régulation, avec un comportement de régulation considérablement plus lent, est prévu pour la régulation de la puissance de sortie (P_{OUT}) en correspondance à une grandeur de référence (P_{SOLL}) apportée.

2. Amplificateur optique régulé (V, V1, ...) selon la revendication 1,
**caractérisé en ce que** le premier dispositif de régulation est formé d'un amplificateur optique (PL, PK, VFA) d'un deuxième convertisseur optoélectrique (OE2) raccordé à sa sortie et d'un premier comparateur (COM1) auquel, par l'intermédiaire d'un premier convertisseur optoélectrique (OE1) est apporté un signal de mesure (p_{IN}) qui correspond au niveau d'entrée, et
**en ce que** le deuxième dispositif de régulation est essentiellement formé de l'amplificateur optique (PL, PK, VFA), du convertisseur optoélectrique (OE2) raccordé à sa sortie, d'un deuxième comparateur (COM2), à la deuxième entrée duquel une valeur de consigne (p_{SOLL}) est appliquée, d'un multiplicateur (MU) raccordé entre le premier convertisseur optoélectrique (OE1) et le premier comparateur (COM1) et auquel est appliqué le signal de sortie du deuxième comparateur, et du premier comparateur (COM1).

3. Amplificateur optique régulé (V) selon l'une des revendications précédentes, **caractérisé en ce qu'**il est réalisé sous la forme d'un amplificateur à fibres (PL, PK, VFA) et **en ce que** le courant de pompage (I_{PUMP}) est commandé par les dispositifs de régulation.

4. Amplificateur optique régulé (V) selon l'une des revendications précédentes, **caractérisé en ce que** le deuxième dispositif de régulation (OE1, OE2, R2, R1; RE, DAW, MU, COM1, PL, VFA) présente une partie intégrale ou est configuré comme régulateur intégral.

5. Amplificateur optique régulé (V, V1, ...) selon l'une des revendications précédentes, **caractérisé en ce que** le deuxième dispositif de régulation présente une partie à temps mort.

6. Amplificateur optique régulé (V, V1, ...) selon l'une des revendications précédentes, **caractérisé en ce que** la constante de temps du deuxième dispositif de régulation (OE1, OE2, R2, R1, RE, DAW, IN, MU, COM1, PL, VFA) peut être modifiée.

7. Ligne de transmission contenant plusieurs amplificateurs (V, ...) selon la revendication 1 raccordés en chaîne, **caractérisée en ce qu'**une valeur de consigne (P_{SOLL}) qui définit la puissance de sortie (P_{OUT}) chaque fois souhaitée est appliquée comme grandeur de référence aux amplificateurs (V, ...).

8. Ligne de transmission selon la revendication 7, **caractérisée en ce qu'**une valeur de consigne numérique (P_{SOLL}) qui contient le nombre des signaux WDM actifs est transmise comme grandeur de référence.
